# EUROPÄISCHE PATENTANMELDUNG

(11) **EP 0 947 379 A2**
(43) Veröffentlichungstag der Anmeldung: **06.10.1999**
(21) Anmeldenummer: 99660057.3
(22) Anmeldetag: 01.04.1999
(51) Int. Cl.: B60L 15/10, B60L 3/08

(54) **Steuerungssystem eines Flurförderzeugs**

(30) Priorität: 03.04.1998 FI 980777
(71) Anmelder: Rocla Oyj, 04401 Järvenpää (FI)
(72) Erfinder: Sarkkinen, Kyösti, 04400 Järvenpää (FI); Karvonen, Teuvo, 15110 Lahti (FI); Kemppinen, Martti, 02200 Espoo (FI)
(74) Vertreter: Kupiainen, Juhani Kalervo

(57) **Zusammenfassung**

Zur Steuerung des Flurförderzeugs wird eine Anlage verwendet, die ein steuerndes und treibendes Rad (401), das in verschiedenen Fahrtrichtungen entsprechende Stellungen schwenkbar ist, einen Fahrmotor (404) zum Drehen des genannten Rades zwecks Bewegung des Flurförderzeugs und einen Gashebel (405) zum Geben von Fahrbefehlen für das Drehen des genannten Rades aufweist. Das System weist einen Steuerungskreis (406, 408) zur Übertragung von Fahrbefehlen von dem Gashebel zum Fahrmotor auf, der so ausgeführt ist, den mit dem Gashebel gegebenen, die Fahrt in einer bestimmten Nenn-Fahrtrichtung betreffenden Befehl an den Fahrmotor in einer Form zu übertragen, die vom Fahrmotor ausgeführt der Fortbewegung des Flurförderzeugs in der Richtung entspricht, die unter Berücksichtigung der zum selben Zeitpunkt vorhandenen Stellung des genannten Rades der genannten Nenn-Fahrtrichtung am nächsten ist.

## Beschreibung

Die Erfindung betrifft die Ausführung eines zur Steuerung eines Flurförderzeugs vorgesehenen Steuerungssystems derart, daß es in der Praxis effizient, ergonomisch und herstellungs-kostengünstig ist.

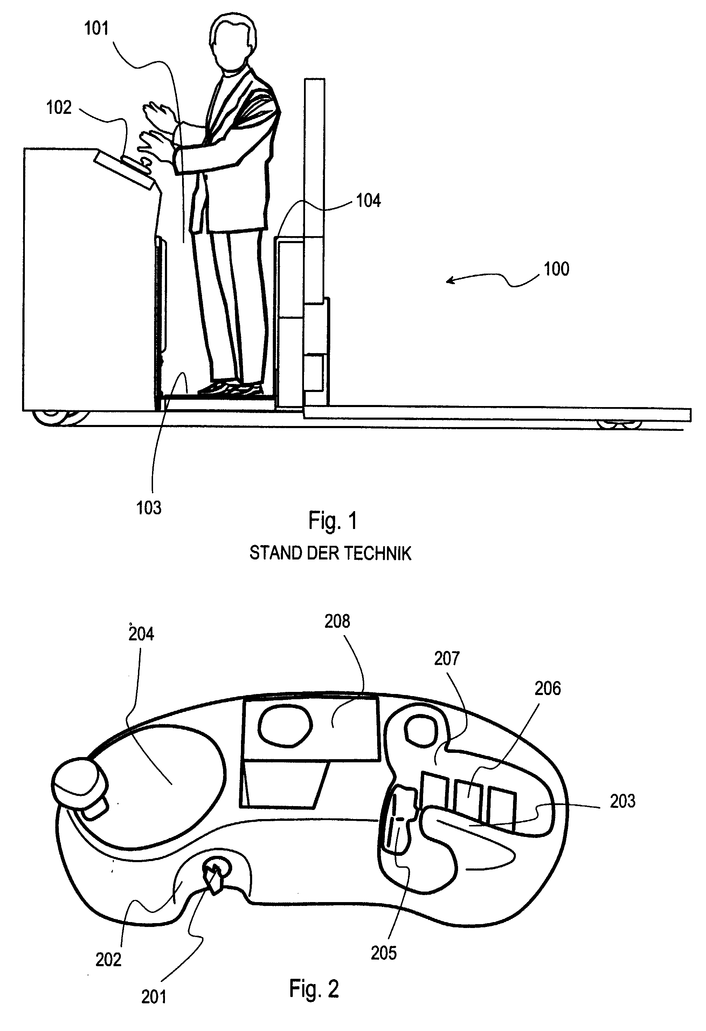

Als Flurförderzeug wird hauptsächlich ein für den Lager-und Ladebetrieb vorgesehener motorisierter, auf Rädern fahrender Wagen bezeichnet, der eine Hebegabel oder ähnliche Vorrichtung zum Anheben und Transportieren einer Last sowie einen Führerstand für den Fahrer des Flurförderzeugs aufweist. Flurförderzeug kann es in vielen verschiedenen Größen geben. Fig. 1 zeigt eine bekannte Konstruktion eines leichten Flurförderzeugs 100. Der Führerstand 101 ist mit einem Steuerfeld 102 ausgerüstet, das in chrakteristischer Weise ein Steuerrad und einen Gashebel zum Steuern des Flurförderzeugs, ein Zündschloß zur Verhinderung unbefugter Benutzung des Flurförderzeugs und elektrische Schalter zur Bedienung der elektrisch gesteuerten Funktionen des Flurförderzeugs aufweist. Der Fahrer steht auf dem Fußboden 103 des Führerstands oder er lehnt sich gegen die Stütze 104 oder sitzt auf einem separaten Sitz.

In dem Flurförderzeug nach Fig. 1 liegt hinsichtlich der Betriebsergonomie und -sicherheit ein Problem darin, daß die lenkenden Räder zugleich die treibenden Räder sind und daß sie über 90 Grad aus der "Direkt-vorwärts"-Stellung drehbar sind. Es sind auch Flurförderzeuge bekannt, bei denen der Drehsektor maximal ±90 Grad ist, wobei das Problem nicht auftritt, aber bei einigen Flurförderzeugen drehen sich die Räder oder das Rad sogar um 360 Grad ohne Begrenzung. Der Fahrer eines solchen Flurförderzeugs könnte das lenkende und treibende Rad / die lenkenden und treibenden Räder in eine Stellung geschwenkt haben, bei der der Vorwärts-Druck auf den Gashebel eine Rückwärtsbewegung des Flurförderzeugs oder allgemein eine Bewegung in eine andere Richtung verursacht als vom Fahrer vorgesehen war.

Vom Stand der Technik ist eine Lösung bekannt, bei der Fahrer mit einer separaten Wechselkupplung die Fahrtrichtung wählen kann. Die Wechselkupplung erfordert jedoch Platz im Armaturenbrett des Flurförderzeugs und erhöht die Herstellungskosten. Zusätzlich setzt ihr Einsatz voraus, daß der Fahrer sich extra darauf konzentriert, in welche Richtung er die Fahrtrichtung zuletzt geändert hat.

Der vorliegenden Erfindung liegt die Aufgabe zugrunde, eine neue Flurförderzeugsteuerungslösung vorzustellen, die ergonomisch und sicher ist.

Zur Lösung dieser Aufgabe lehrt die Erfindung, den die in einer bestimmten Nenn-Fahrtrichtung auszuführende Fahrt betreffenden Befehl so zu dem die Räder treibenden Fahrmotor zu schalten, daß die Räder immer in die Richtung ziehen, die der vorgesehenen Nenn-Fahrtrichtung so nahe wie möglich ist. Außerdem kann dem Fahrer mit dem Steuerungssystem die Richtung angezeigt werden, in die das Flurförderzeug sich zum jeweiligen Zeitpunkt in Entsprechung des Bewegungsbefehls bewegen würde.

Für das erfindungsgemäße Steuerungssystem ist charakteristisch, daß das System aus einem Steuerkreis zum Übertragen von Fahrbefehlen von dem Gashebel zum Fahrmotor besteht, wobei der Steuerkreis ausgeführt ist, den mit dem Gashebel gegebenen, die Fahrt in einer bestimmten Nenn-Fahrtrichtung betreffenden Befehl an den Fahrmotor in einer Form zu übertragen, die vom Fahrmotor ausgeführt der Bewegung des Flurförderzeugs in der Richtung entspricht, die unter Berücksichtigung der zum selben Zeitpunkt vorhandenen Stellung des genannten Rades der genannten Nenn-Fahrtrichtung am nächsten ist.

Erfindungsgemäß weist das Steuerungssystem Mittel zur Erfassung dessen auf, ob das steuernde und treibende Rad mehr oder weniger als 90 Grad aus einer bestimmten Nenn-Fahrtrichtung geschwenkt ist. Die Nenn-Fahrtrichtung ist im allgemeinen die gleiche wie die gerade Vorwärtsfahrt. Der Flurförder-zeugfahrer gibt die Fahrbefehle typischerweise über einen in zwei Richtungen zu bewegenden Gashebel, dessen Bewegung in die erste Richtung dem Fahrbefehl in Nenn-Fahrtrichtung (vorwärts) und in die andere Richtung dem Fahrbefehl in die entgegengesetzte Richtung (rückwärts) entspricht. Vor dem Anfahren untersucht das Steuerungssystem, in welche Richtung das steuernde und treibende Rad zeigt, und schaltet die Fahrbefehle derart, daß z.B. der Fahrbefehl "vorwärts" das Flurförderzeug immer in Richtung des Vordersektors bewegt, unabhängig davon, wieviel das steuernde und treibende Rad von seiner Nenn-"Vorwärts"-Stellung abgeschwenkt ist.

In das Steuerungssystem können auch Mittel zur Anzeige für den Fahrer einbezogen werden, in welche Richtung das Flurförderzeug sich zu einem bestimmten Zeitpunkt bewegen würde, wenn der Fahrer, z.B. durch Drücken des Gashebels, Fahrbefehl geben würde. Ein bevorzugtes Mittel zur Erzeugung der Anzeige besteht in einer Reihe von in verschiedene Richtungen zeigenden, separat zu beleuchtenden Pfeilen, von denen das Steuerungssystem jeweils denjenigen Pfeil beleuchtet, der der voraussichtlichen Bewegungsrichtung am besten entspricht. Die Anzeige kann auch auf viele andere Weisen ausgeführt werden: anstelle einer visuellen Anzeige oder zusätzlich zu dieser kann z.B ein akustisches Zeichen verwendet werden.

Im folgenden wird die Erfindung auf die als Beispiel dargestellten bevorzugten Ausführungsformen und die beigefügten Zeichnungen ausführlicher erläutert, in denen
Fig. 1 ein Sammelflurförderzeug vom Stand der Technik zeigt,
Fig. 2 die Anordnung des Lenkrades und des Gashebels in einem erfindungsgemäßen Steuerungssystem zeigt,
Fig. 3 eine Anzeigetafel des Steuerungsmoduls zeigt,
Fig. 4 ein Blockschema eines erfindungsgemäßen Systems zeigt,
Fig. 5 ein bevorzugtes Zustandsschema des Steuerungs-systems zeigt und
Fig. 6 eine bevorzugte Konstruktion der Anzeigetafel nach Fig. 4 zeigt.

Im Zusammenhang mit der Erläuterung des Standes der Technik wurde auf Fig. 1 hingewiesen, weshalb in der folgenden Erläuterung der Erfindung und ihrer bevorzugten Ausführungsformen hauptsächlich auf die Figuren 2 - 6 hingewiesen wird. In den Figuren werden für dieselben Teile dieselben Bezugsnummern benutzt.

Fig. 2 zeigt ein aus dem Blickwinkel des Fahrers gese-henes Flurförderzeugsteuerungsmodul, in welchem das Lenkrad und der Gashebel des erfindungsgemäßen Stuerungssystems untergebracht werden können. Das Zündschloß 201 ist vorzugsweise in der Vertiefung 202 der vertikalen Fläche des Steuerungsmoduls angeordnet. An der rechten Seite des Steuerungsmoduls befindet sich ein Haltegriff 203, der aus demselben Material ausgebildet ist wie der Körper des Steuerungsmoduls. Das Lenkrad 204 befindet sich im linken Teil des Steuerungsmoduls. Der Gashebel 205 ist vorzugsweise eine mit Greifflügeln versehene runde Scheibe, die am Ende der annähernd waagerechten und in der Figur dargestellten Stellung der links-rechts-gerichteten Drehachse angebracht und mit in die Mittellage rückführenden Federn ausgerüstet ist. Damit braucht der Fahrer seinen festen Griff am Haltegriff 203 nicht zu lösen, sondern er kann den Gashebel in beiden Richtungen um seine Achse mit den Fingern derselben Hand drehen, mit der er sich am Haltegriff festhält. In der Abbildung ist auch eine bevorzugte Anordnung der wichtigsten die elektrischen Funktionen des Flurförderzeugs steuernden Schalter 206 in der durch die Formgestaltung des Haltegriffes 203 mit diesem verbundenen Vertiefung 207 zu sehen.

Der zwei Funktionen ausführende Gashebel 205 könnte auch durch zwei separate Hebel ersetzt werden, von denen einer zum Geben des Vorwärtsbefehls und der andere zum Geben des Rück-wärtsbefehls benutzt werden könnte.

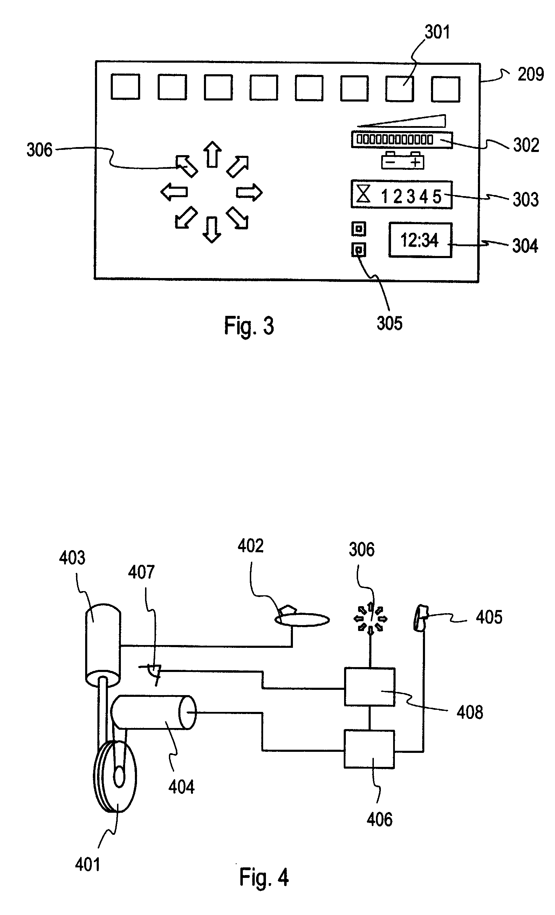

Der mit Bezugsnummer 208 bezeichnete Teil des Steuerungsmoduls enthält vorzugsweise eine Anzeigetafel, über die das Steuerungsmodul dem Fahrer den Flurförderzeugbetrieb betreffende Daten anzeigt. Eine bevorzugte Anzeigetafel 208 ist in Fig. 3 gezeigt. In dieser können Anzeigeleuchten 301 zur Anzeige der Zustände von Bremsen, Hubgabel oder anderen Ausrüstungen und/oder des Wartungsbedarfs, ein Meßgerät 302 zur Darstellung des Zustands der Akkuanlage des Flurförderzeugs, ein Betriebsstundenzähler 303, eine Realzeituhr 304, mit der Benutzung der Uhr (zeiteinstellung, Zeitnahme usw.) verbundene Schalter 305 sowie eine Gruppe der die Fahrtrichtung anzeigenden Indikationspfeile 306 untergebracht sein. Die Erfindung wird nicht dadurch begrenzt, wieviele Elemente in der Anzeigetafel 209 enthalten sind.

Fig. 4 zeigt das elektrische Blockschema eines Systems, mit dem die erfindungsgemäße Funktion ausgeführt werden kann. Das steuernde und treibende Rad 401 wird von dem über das Lenkrad 402 gesteuerten Elektromotor 403 geschwenkt und von dem Fahrmotor 404 in Drehung versetzt. Der Gashebel 405 gibt die Steuerungsbefehle an den Fahrmotor 404 über den Überset-zungskreis 406. Der Meßgeber 407 mißt die Schwenkung des steuernden und treibenden Rades 401; diese Information könnte natürlich auch vom Lenkrad 402 oder vom Elektromotor 403 genommen werden. Der Meßgeber 407 gibt die Stellungsdaten des steuernden und treibenden Rades an die Steuerungslogik 408 weiter, die die Indikationspfeile 306 ein- und ausschaltet und gegebenenfalls über den Übersetzungskreis 406 die zum Fahrmotor gehenden Vorwärts- und Rückwärts-Befehle untereinander wechselt. Lenkrad 402, Gashebel 405, Übersetzungskreis 406, Steuerungslogik 408 und Indikationspfeile 306 sind vorzugsweise in einem Steuerungsmodul nach Art von Fig. 2 untergebracht.

Das System nach Fig. 4 funktioniert so, daß wenn die "Vorwärts"-Nennstellung des steuernden und treibenden Rades / der steuernden und treibenden Räder beim Anfahren zum hinteren Sektor zeigt, der Steuerungskreis die vom Gashebel gegebenen "Vorwärts"- und "Rückwärts"-Signale untereinander tauscht. Immer wenn das Flurförderzeug von der Stelle anfährt, verursacht der Vorwärtsdruck auf den Gashebel eine Bewegung des Flurförderzeugs zum Vordersektor hin, d.h. in die weniger als 90 Grad von der direkt nach vorne zeigenden Richtung abweichende Richtung, die durch Drehen des steuernden und treibenden Rades / der steuernden und treibenden Räder unter Berücksichtigung deren derzeitiger Stellung erreicht wird.

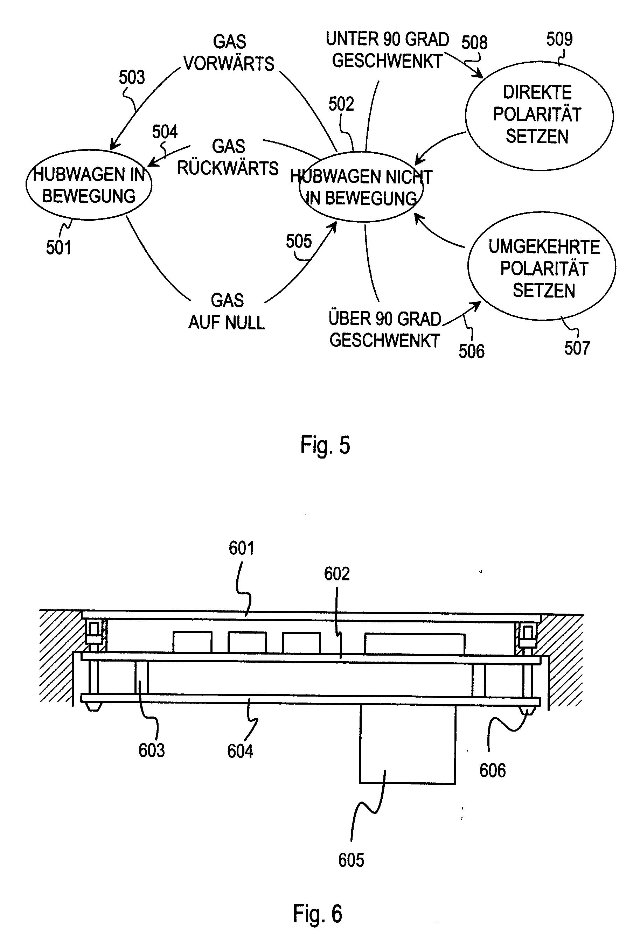

Die Funktion des Systems kann anhand des Zustandschemas nach Fig. 5 erläutert werden. Das Steuerungsschema hat hinsichtlich der Schaltung der Fahrbefehle zwei Zustände, von denen das Flurförderzeug im Zustand 501 sich bewegt und im Zustand 502 auf der Stelle steht oder frei rollt. Die Zustände lassen sich auch ohne eigentliche Wahrnehmung der Flurförderzeugbewegung definieren, so daß im Zustand 501 der Gashebel sich in einer anderen Stellung befindet als in der Nullstellung und der Gashebel im Zustand 502 in Nullstellung ist. Unter Nullstellung ist die Stellung des Gashebels zu verstehen, in der er dem Motor keinen Fahrbefehl gibt. Der Übergang vom Zustand 502 in den Zustand 501 erfolgt dann, wenn der Gashebel aus der Nullstellung entweder nach vorne (503) oder nach hinten (504) bewegt wird. Dementsprechend erfolgt der Übergang vom Zustand 501 in den Zustand 502 dann, wenn der Gashebel in die Nullstellung (505) zurückkehrt.

Im Zustand 502 untersucht das Steuerungssystem ständig, regelmäßig oder nach einer anderen geeigneten Ordnung, ob das lenkende und treibende Rad / die lenkenden und treibenden Räder mehr als 90 Grad von der Nenn-Fahrtrichtung abgeschwenkt sind, die der geraden Vorwärtsfahrt entspricht. Die Erkennung 506, aufgrund welcher das lenkende und treibende Rad / die lenkenden und treibenden Räder mehr als 90 Grad von der Nenn-Fahrtrichtung abgeschwenkt sind, verursacht den Übergang in den Zustand 507, in dem das Steuerungssystem sog. Polaritätsumkehrung für die Fahrbefehle setzt: der mit dem Gashebel gegebene Fahrbefehl für Vorwärtsfahrt verursacht die Motordrehung in Nenn-Rückwärtsrichtung. Die geschwenkte Stellung des lenkenden und treibenden Rades / der lenkenden und treibenden Räder und die Drehung des Motors in Nenn-Rückwärtsrichtung verursachen zusammen, daß das Flurförderzeug sich in Richtung des Vordersektors zu bewegen beginnt. Nach dem Setzen der Polaritätsumkehrung erfolgt unmittelbare Rückkehr in den Zustand 502.

Die Erkennung 508, aufgrund welcher das lenkende und treibende Rad / die lenkenden und treibenden Räder weniger als 90 Grad geschwenkt sind, verursacht den Übergang vom Zustand 502 in den Zustand 509, in dem das Steuerungssystem sog. direkte Polarität für die Fahrbefehle setzt: der mit dem Gashebel gegebene Fahrbefehl für Vorwärtsfahrt verursacht die Motordrehung in Nenn-Vorwärtsrichtung. Die Stellung des lenkenden und treibenden Rades / der lenkenden und treibenden Räder und die Drehung des Motors in Nenn-Vorwärtsrichtung verursachen zusammen, daß das Flurförderzeug sich in Richtung des Vordersektors zu bewegen beginnt. Nach dem Setzen der direkten Polarität erfolgt unmittelbare Rückkehr in den Zustand 502.

Es ist klar, daß das Setzen der Polaritätsumkehrung oder der direkten Polarität gleichzeitig auch so wirkt, daß wenn mit dem Gashebel der Befehl zur Rückwärtsfahrt gegeben wird, die Stellung des lenkenden und treibenden Rades / der lenkenden und treibenden Räder und die Drehung des Fahrmotors zusammen das Flurförderzeug immer in Richtung des hinteren Sektors bewegen.

Der konkrete Nutzen für den Benutzer des Systems besteht darin, daß die neue Bewegungsrichtung des Flurförderzeugs trotz der Stellung des lenkenden und treibenden Rades 401 zusammen mit der Bewegung des Gashebels immer in demselben 180-Grad-Sektor liegt, wobei das Flurförderzeug sich immer in die für den Benutzer logische Richtung bewegt. Außerdem kann der Benutzer durch ausreichendes Drehen des Lenkrades die Bewegungsrichtung des Flurförderzeugs beliebig ändern, ohne daß er die Stellung des Gashebels zu verändern braucht. Zum Beispiel kann aus einem engen Zwischenraum zwischen Lade-pritschen mit dem Befehl 504 für Rückwärtsfahrt rückwärts herausgefahren werden, die Bewegungsrichtung des Flurförderzeugs mit dem Lenkrad 402 nach vorne umgekehrt und während der Fahrt der Gashebel nach vorne 503 gewechselt werden, damit er der neuen, durch Drehen des Lenkrads erzielten wirklichen Fahrtrichtung des Flurförderzeugs entspricht. Das Nachvorneschieben des Gases bedeutet unbedingt eine Überschreitung des Nullpunkts 502, womit bei diesem Beispiel die direkte Polarität 509 gesetzt wird. Da die Drehrichtung des Motors sich nicht ändert, erfolgt die Wendung weich und schnell.

Eine einfache Ausführung des Meßgebers 407 und der Steuerungslogik 408 besteht in einem elektromechanischen Schalter, der z.B. mit der Steuerungsachse eines bestimmten steuernden und treibenden Rades verbunden ist und bei dem das Schwenken des Rades über eine bestimmte Grenze hinaus den Wechsel der beiden gegenseitigen Polaritäten des den Fahrbefehl übertragenden elektrischen Leiters verursacht. Diese Lösung setzt jedoch zusätzlich die Anwendung eines Speicher-elements voraus, mit dem der Polaritätswechsel während der Fahrt verhindert wird; nach Fig. 5 darf während der Fahrt des Flurförderzeugs ein in willkürlicher Größe erfolgendes Schwenken des steuernden und treibenden Rades keinen Einfluß darauf haben, in welcher Richtung sich dieses dreht. Die Herstellung eines elektronischen Steuerungskreises, in dem die Polarität eines bestimmten Befehls von dem von einem bestimmten Meßgeber gelieferten Wert abhängt und in dem der Polaritätswechsel nur beim Vorhandensein einer bestimmten externen Bedingung (bei stehendem Flurförderzeug) zulässig ist, ist eine für den Fachmann an sich bekannte Technik.

Mit den im Steuerungsmodul der erfindungsgemäßen Ausführungsform der Erfindung vorhandenen Indikatorpfeilen 306 kann dem Fahrer zusätzlich angezeigt werden, welches ungefähr die Richtung ist, in welche das Vorwärtsdrücken des Gashebels das Flurförderzeug bewegt. Anstelle von separaten Pfeilen kann als Richtungsindikator z.B. ein in einer Flüssigkeitsanzeige vorhandener Kreis verwendet werden, der sich aus einer großen Anzahl von in verschiedene Richtungen zeigenden Strichen oder Pfeilen zusammensetzt. Mit einem Richtungsindikator dieser Art kann eine sehr genaue Richtungsanzeige erreicht werden gegenüber der weiter oben erläuterten, aus einigen beleuchteten Pfeilen bestehenden Anordnung. Das setzt jedoch eine etwas kompliziertere Steuerungslogik und einen genaueren Meß-geber zur Klärung der Stellung des steuernden und treibenden Rades voraus. Die Erfindung erfordert natürlich nicht, daß Richtungsindikator, Lenkrad oder Gashebel als Teil einer beweglichen Steuerungstafel ausgeführt werden, sondern sie können auch an einer anderen Stelle des Flurförderzeugs untergebracht werden, wo sie - unter Berücksichtigung der normalen Fahrstellung - für den Fahrer leicht zugänglich sind.

Fig. 6 zeigt eine bevorzugte Art zur Ausführung der Anzeigetafel 209. Das visuelle Bild für den Fahrer wird durch die Maske 601 bestimmt, die geeignete transparente Bereiche, Aufdrucke und andere visuelle Effekte aufweist. Die Indikationspfeile, Kontrolleuchten, das Akkumeßgerät und weitere für die visuelle Übersicht erforderliche Komponenten befinden sich in den in der Maske vorhandenen transparenten Bereichen auf der unter der Maske vorhandenen ersten Schaltplatte 602. Mit dieser ist über die Anschlüsse 603 eine zweite Schaltplatte 604 verbunden, auf deren Oberfläche sich z.B. die Steuerungslogik (408 in Fig. 4), der Übersetzungskreis (406 in Fig. 4), die Leistungstransistorschaltungen 605 und andere Platz beanspruchende elektrische Komponenten befinden. Die aus den Schaltplatten gebildete Gesamtheit ist durch Schrauben 606 mit dem Körper des Steuerungsmoduls verbunden.

## Patentansprüche

1. System zum Steuern eines Flurförderzeugs, enthaltend
- ein steuerndes und treibendes Rad (401), das in verschiedenen Fahrtrichtungen entsprechende Stellungen geschwenkt werden kann,
- einen Fahrmotor (404) zum Drehen des genannten Rades, um das Flurförderzeug zu bewegen und
- einen Gashebel (205, 405) zum Erteilen von Fahrbefehlen zum Drehen des genannten Rades,
dadurch gekennzeichnet, daß das System einen Steuerkreis (406, 408) zum Übertragen von Fahrbefehlen von dem Gashebel zum Fahrmotor aufweist, wobei der Steuerkreis ausgeführt ist, den mit dem Gashebel gegebenen, die Fahrt in einer bestimmten Nenn-Fahrtrichtung betreffenden Befehl an den Fahrmotor in einer Form zu übertragen, die vom Fahrmotor ausgeführt der Bewegung des Flurförderzeugs in der Richtung entspricht, die unter Berücksichtigung der zum selben Zeitpunkt vorhandenen Stellung des genannten Rades der genannten Nenn-Fahrtrichtung am nächsten ist.

2. System nach Patentanspruch 1, dadurch gekennzeichnet, daß
- der Fahrmotor (404) eine Nenn-Vorwärtsdrehrichtung und eine Nenn-Rückwärtsdrehrichtung hat,
- das genannte Rad (401) eine Nenn-Vorwärtsstellung und eine Nenn-Rückwärtsstellung hat und
- der Gashebel (205, 405) eine wirkliche Vorwärtsrichtung und eine wirkliche Rückwärtsrichtung hat,
wobei der genannte Steuerkreis (406, 408) ausgeführt ist zum Übertragen
- des der Vorwärtsrichtung des Gashebels entsprechenden Fahrbefehls an den Fahrmotor derart, daß wenn das genannte Rad zum Zeitpunkt der Fahrbefehlserteilung auf der Stelle und der Nenn-Vorwärtsstellung näher steht als der Nenn-Rückwärtsstellung, der Fahrmotor als Folge des Fahrbefehls in Vorwärts-Drehrichtung dreht, und wenn das genannte Rad zum Zeitpunkt der Fahrbefehlserteilung auf der Stelle und der Nenn-Rückwärtsstellung näher steht als der Nenn-Vorwärtsstellung, der Fahrmotor als Folge des Fahrbefehls in Rückwärts-Drehrichtung dreht und
- des der Rückwärtsrichtung des Gashebels entsprechenden Fahrbefehls an den Fahrmotor derart, daß wenn das genannte Rad zum Zeitpunkt der Fahrbefehlserteilung auf der Stelle und der Nenn-Vorwärtsstellung näher steht als der Nenn-Rückwärts-stellung, der Fahrmotor als Folge des Fahrbefehls in Rückwärts-Drehrichtung dreht, und wenn das genannte Rad zum Zeitpunkt der Fahrbefehlserteilung auf der Stelle und der Nenn-Rückwärtsstellung näher steht als der Nenn-Vorwärtsstellung, der Fahrmotor als Folge des Fahrbefehls in Vorwärts-Drehrichtung dreht.

3. System nach Anspruch 2, dadurch gekennzeichnet, daß das System außerdem einen Richtungsindikator (306) zur zumindest ungefähren Anzeige der Richtung aufweist, in die das Flurförderzeug sich zu einem bestimmten Zeitpunkt von dem genannten Rad gesteuert und getrieben in Entsprechung des mit dem Gashebel an den Fahrmotor zu gebenden, der Fahrt in eine bestimmte Nenn-Fahrtrichtung entsprechenden Befehls bewegen würde.

4. System nach Anspruch 3, dadurch gekennzeichnet, daß der Richtungsindikator (306) eine Reihe in verschiedene Richtungen zeigender, wahlweise beleuchtbarer Pfeile aufweist, und daß der genannte Steuerkreis ausgeführt ist, von diesen Pfeilen denjenigen zu beleuchten, der am besten der Richtung entspricht, in die das Flurförderzeug sich zu dem bestimmten Zeitpunkt in Entsprechung des mit dem Gashebel zu gebenden, der Vorwärtsfahrt entsprechenden Befehls bewegen würde.

5. System nach Anspruch 1, dadurch gekennzeichnet, daß das System ein Steuerungsmodul (401) zur Anordnung des Gashebels und des Richtungsindikators sowie einen Mechanismus (203) zur Befestigung des Stuerungsmoduls am Flurförderzeug aufweist derart, daß das Steuerungsmodul in Aufwärts-Abwärts-Richtung und Vorwärts-Rückwärts-Richtung beweglich ist.

6. System nach Anspruch 1, dadurch gekennzeichnet, daß der genannte Gashebel (205, 405) eine mit Greifflügeln versehene runde Platte ist, die am Ende einer im wesentlichen waagerechten Drehachse befestigt und mit in die Mittellage rückführenden Federn versehen ist.
